# EUROPEAN PATENT APPLICATION

(11) **EP 0 884 512 A2**
(43) Date of publication of application: **16.12.1998**
(21) Application number: 98110465.6
(22) Date of filing: 08.06.1998
(51) Int. Cl.: F16K 31/40, B60K 15/04

(54) **A valve unit for a gaseous fuel tank of a vehicle**

(30) Priority: 10.06.1997 IT TO970507
(71) Applicant: MTM - Meccanica Tecnica Moderna S.r.l., 12062 Cherasco (IT)
(72) Inventor: Monta, Alessandro, 12042 Bra (IT); Asteggiano, Matteo, 12060 Pollenzo (IT)
(74) Representative: Jorio, Paolo

(57) **Abstract**

A valve unit (1) for a gaseous fuel tank (1a) has a fuel outlet duct (5) which can communicate with an associated tank (1a) and an interception valve device (9) associated with the outlet duct (5) itself; the valve device (9) being provided with a shutter valve (10) disposed along the outlet duct (5) to intercept the flow of fuel passing, in use, within the outlet duct (5) itself, and a control circuit (11) for the shutter valve (10) provided with a controlling solenoid valve (34).

## Description

The present invention relates to a valve unit for a gaseous fuel tank of a vehicle.

As is known, tanks for gaseous fuel mounted on vehicles are provided with associated valve units, each comprising a valve device directly connected to the tank and having an inlet duct which can allow the introduction of gaseous fuel to the interior of the tank, and an outlet duct for delivery of the gaseous fuel contained in the tank. Each of the known valve units further comprises a solenoid safety valve of the "on-off" type which is disposed in the outlet duct to intercept the flow of fuel towards the engine and, in use, to prevent the escape of fuel when the engine is turned off and in the event of operating anomalies in the engine itself and/or following accidental rupture of the duct connecting the valve unit to the engine. Normally the solenoid valve has a threaded end section screwed into a threaded hole formed in a body of the said valve device, and projects from the valve device itself.

Although they operate satisfactorily under normal operating conditions, the known valve units of the above-described type are not always able to prevent or limit the escape of fuel from the tank when they are involved in road accidents. In fact, in such conditions, the solenoid valve can rupture, normally due to the associated threaded portion being cut off, so that the fuel contained in the tank escapes freely from the tank itself, dispersing into the surrounding environment with inevitable risks of fire or explosions.

The object of the present invention is to provide a valve unit which makes it possible to resolve the above-explained problems in a simple and economic manner and which, at the same time, demonstrates high reliability and functional efficiency.

According to the present invention there is provided a valve unit for a gaseous fuel tank of a vehicle, the unit comprising a fuel outlet duct having an inlet able to communicate with an associated tank and an outlet communicating with the outside, and interception valve means associated with the said outlet duct, characterised in that the said interception valve means comprise a valve disposed in the said outlet duct to intercept the flow of fuel which, in use, passes through the outlet duct itself, and a fluid control circuit for the said valve.

The invention will now be described with reference to the attached drawings which illustrate a non-limitative embodiment thereof, in which:
Figure 1 is a front view of a preferred embodiment of the valve unit according to the present invention mounted on a tank, partially indicated, for a vehicle; and
Figure 2 illustrates a detail of Figure 1 in section and on an enlarged scale.

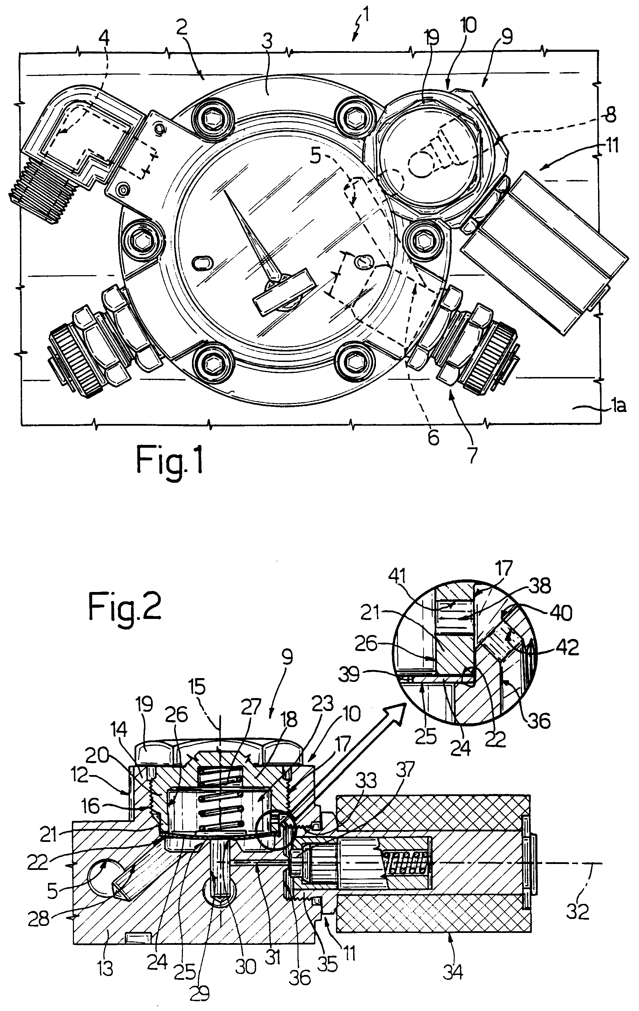

In Figure 1, the reference numeral 1 indicates a valve unit for a tank 1a for gaseous fuels for a vehicle (not illustrated). The unit 1 includes a valve device 2, commonly known by the commercial term "multi-valve", to control the flow of fuel in and out of the tank 1a and the level of fuel within the tank 1a itself.

In particular, the valve device 2 comprises a hollow body 3 which is directly connected to the tank 1a and defines a fuel inlet duct 4 able to allow the introduction of fuel into the interior of the tank 1a, and an outlet duct 5 for delivery of gaseous fuel contained in the tank 1a to the engine of the vehicle on which the tank 1a is mounted.

The outlet duct 5 has an inlet 6 communicating with the tank 1a through a known closure tap 7, and an outlet 8 communicating with the outside and connected, in use, to an associated engine via a circuit, not illustrated.

The valve unit 1 further comprises a safety valve device 9 disposed in the outlet duct 5 whereby, in use, to intercept the flow of fuel out from the tank 1a and inhibit the escape of fuel when the engine is deliberately turned off and/or upon operating anomalies of the engine, or also following the accidental rupture of the circuit connecting the valve unit 1 to the engine (not illustrated).

As illustrated in Figure 1 and, in particular, in Figure 2, the valve device 9 comprises a valve 10 having a shutter disposed in the outlet duct 5 to open/close the outlet duct 5, and a control circuit 11 for the shutter valve 10 which is, in use, controlled by a central control unit (not illustrated) of the vehicle (not illustrated).

As illustrated, in particular, in Figure 2, the valve 10 comprises a hollow body 12 which, in turn, includes an integral portion 13 for attachment to the body 3, and a short tubular portion 14 having an axis 15. The tubular portion 14 further has an outer aperture closed in a fluid-tight manner by a cup-shape body 16 which comprises a side wall 17 and a bottom wall 18, both housed in the tubular portion 14. Of the walls 17 and 18, the bottom wall 18 carries an integral hexagonal head 19 disposed in contact against an outer frontal surface of the tubular portion 14, whilst the side wall 17 comprises, starting from the hexagonal head 19, an externally-threaded tubular portion 20 coupled to an internally-threaded section of the tubular portion 14, and an annular end portion 21 extending in a position facing an axial annular shoulder 22 formed internally of the tubular portion 14.

Sill with reference to Figure 2, the cup-shape body 16 and the attachment portion 13 together define a cavity 23 of the valve 10 which further includes a flexible membrane 24 housed within the cavity 23 and having an outer perimetral portion pinched between the shoulder 22 and the annular portion 21 of the cup-shape body 16.

The membrane 24 sub-divides the cavity 23 into two chambers, indicated 25 and 26, of which the chamber 26 houses a compression coil spring 27 extending between the membrane 24 and the bottom wall 18 of the cup-shape body 16 in a position coaxial to the axis 15.

The chamber 25 extends along the outlet duct 5 which includes first and second duct sections, indicated 28 and 29, both formed through the attachment portion 13 and communicating, on one side, with the chamber 25 and, on the other, with the inlet 6 to the outlet duct 5 and, respectively, with the outlet 8 of the duct 5.

The section 29 extends coaxially of the axis 15, has its inlet 30 facing the membrane 24 and can be closed by the membrane 24 itself, and communicates with a duct 31 constituting part of the control circuit 11.

The duct 31 extends coaxially of an axis 32 orthogonal to the axis 15, has a very much smaller flow cross-section than that of the duct section 29, and opens into a lateral cylindrical hole 33 coaxial of the axis 32 and internally threaded, this also constituting part of the control circuit 11.

Still with reference to Figure 2, the control circuit further includes a known control solenoid valve 34, not described in detail, which is connected, in use, to the said central control unit of the vehicle (not illustrated), extends along the axis 32 and has its externally-threaded attachment end portion 35 engaging the threaded hole 33 and delimiting a chamber 36 within the hole 33 itself.

The solenoid valve 34 includes a shutter 37 which is partially housed within the chamber 36 in a position coaxial to the axis 32 and facing the duct 31, and axially moveable within the chamber 36 to open/close the duct 31.

Still with reference to Figure 2, the control circuit 11 includes, finally, a further passage 38 for providing communication between the chamber 26 and the chamber 36, and a hole 39 formed through the membrane 24 parallel to the axis 15 to put the chambers 25 and 26 into communication with each other and having a very much smaller flow cross-section than the passage 38.

The passage 38 includes an intermediate annular chamber 40 delimited by the tubular portion 14 on one side, and the side wall 20 of the cup-shape body 16 on the other, and two ducts 41 and 42 for communicating between the chamber 40 itself and the chambers 26 and 36 respectively. The ducts 41 and 42 have respective flow cross-sections substantially equal to the flow cross-section of the duct 31 and greater than the flow cross-section of the hole 39 formed through the membrane 24. Preferably, the hole 39 has a flow cross-section lying between 0.12 and 0.50 square millimetres, and the ratio between the values of the flow cross-sections of the ducts 31, 41, 42 and the hole 39 lies substantially between 1.5 and 8 and, conveniently, varies between 2 and 3.

The operation of the safety device 9 will now be described starting from the condition illustrated in Figure 2 in which the solenoid valve 34 is disposed in its closure position in which its shutter 37 closes the duct 31, isolating the chambers 26, 36 from the section of the duct 30 and, therefore, from the outlet 8 of the duct 5, the membrane 24 is maintained, due to the action of the spring 27 and the pressure balance in the chambers 25 and 26 achieved because of the presence of the hole 39, in its deformed closure position in which it closes the inlet 30 of the duct section 29, preventing the fuel flowing out towards the outlet 8.

Starting from this condition, as soon as fuel is to be supplied to the engine, the solenoid valve 34 is activated by the said central control unit (not illustrated) and the associated shutter 37 is moved to its retracted condition in which it puts the chamber 26 into communication with the outlet 8 of the duct 5. When the chamber 26 is in communication with the outlet 8, since the pressure in the outlet 8 is normally less than that of the tank 1a and therefore of the chamber 25, the pressure in the chamber 26 falls so that the membrane 24 displaces towards the bottom wall 18 of the cup-shape element 16 compressing the spring 27 and opening the inlet 30 of the duct section 29 through which, therefore, the fuel present in the chamber 25 starts to flow, having been supplied to the chamber 25 itself through the duct section 28.

When the solenoid valve 34 is disactivated, the associated shutter 37 again isolates the chamber 26. At this point the pressure within the chamber 26 increases suddenly due to the presence of the hole 39 in the membrane 24 and, consequently, the membrane 24 is again moved to the position in which it closes the duct section 29.

From the above it is evident that, with respect to known arrangements, the device 9 described is not only extremely effective, reliable and safe in normal operating conditions, but extremely reliable and safe even in the event of damage and, in particular, in circumstances in which it is subject to actions involving the partial or complete removal of the solenoid valve 34.

That which has just been explained above derives essentially from the fact that, contrary to known arrangements in which the solenoid valve utilized directly intercepted, in use, the flow of fuel to the engine, in the device 9 described, this function of intercepting the flow of fuel to be supplied to the engine is performed by the valve 10, whilst the solenoid valve 34 only has the task of controlling the valve 10 itself.

Consequently, the solenoid valve 34 is traversed, in use, by an extremely limited flow of fuel, and not by the entire flow of fuel supplied to the engine as in the known arrangements: for which reason, even in the absence of the solenoid valve 34, the valve 10 remains in its closure position by the effect of the spring 27, and the only flow of fuel which can effectively escape from it is that which flows through the ducts 41, 42 and, in practice, only that which succeeds in passing through the hole 39 formed in the membrane 24 which, as mentioned, has however a very small flow cross-section so that the flow of fuel escaping is extremely slight.

From the above, it is thus evident how the constructional characteristics of the valve 10 make it possible to provide an extremely robust valve which is practically insensitive to impacts.

From the above it is also evident that the unit 1 described can have modifications and variations introduced thereto which do not go beyond the range of protection of the present invention. In particular, the valve device 2 could be formed in a different manner from that described, and likewise the valve device 9 could comprise an interception valve for the flow of fuel directed, in use, towards the engine which is different from that described by way of example. In the same way, the control circuit for the valve 10 could be formed in a different manner from that described. In particular, the hole 39 formed through the membrane 24 could be omitted, and the passage for putting the two chambers 25 and 26 into communication with one another could be formed in the body 12.

## Claims

1. A valve unit (1) for a gaseous fuel tank of a vehicle, the unit (1) comprising a fuel outlet duct (5) having an inlet (6) able to communicate with an associated tank (1a) and an outlet (8) communicating with the outside, and interception valve means (9) associated with the said outlet duct (5), characterised in that the said interception valve means (9) comprise a valve (10) disposed in the said outlet duct (5) to intercept the flow of fuel which, in use, passes within the outlet duct (5) itself, and a fluid control circuit (11) for the said valve (10).

2. A unit according to Claim 1, characterised in that the said valve (10) includes a cavity (23) and shutter means (24) housed in the cavity (23) and sub-dividing the cavity (23) itself into first and second chambers (25, 26); the said outlet duct (5) comprising first and second duct sections (28, 29) for putting the said first chamber (25) into communication with the said inlet (6) and the said outlet (8) respectively, the said shutter means (24) extending at least partially in a facing position with one (29) of the said duct sections (28, 29) to close the said duct section (29) in use.

3. A unit according to Claim 2, characterised in that the said second chamber (26) houses resilient means (27) operable to exert on the said shutter means (24) a thrust directed towards the duct section (29) facing the said shutter means (24) itself.

4. A unit according to Claim 3, characterised in that the said resilient means comprise a compression spring (27).

5. A unit according to any of Claims from 2 to 4, characterised in that the said shutter means comprise a resiliently-deformable membrane (24).

6. A unit according to Claim 5, characterised in that the said valve (10) comprises a hollow body (12) which can be connected to the said tank (1a), and a closure body (16) for the hollow body (12) itself; the said bodies (12, 16) delimiting the said cavity (23) and pinching a perimetral portion of the said membrane (24) between them.

7. A unit according to Claim 6, characterised in that the said resilient means (27) extend between the said membrane (24) and the said closure body (16).

8. A unit according to Claim 6 or Claim 7, characterised in that it includes a threaded connector coupling the said closure body (16) to the said hollow body (12).

9. A unit according to any of Claims from 2 to 8, characterised in that the said fluid control circuit (11) includes at least a first duct (39) connecting the said two chambers (25, 26) together.

10. A unit according to Claim 8, characterised in that the said first duct (39) is formed through the said shutter means (24).

11. A unit according to Claim 9 or Claim 10, characterised in that the said fluid control circuit (11) further includes a second duct (31, 36, 38) for connecting the said second chamber (26) with the second section (29) of the said outlet duct (5), and further valve means (34) disposed along the said second duct (31, 36, 38) for intercepting a controlling flow of fuel traversing the second duct (31, 36, 38) itself.

12. A unit according to Claim 11, characterised in that the said further valve means comprise a solenoid valve (34).

13. A unit according to Claim 11 or Claim 12, characterised in that the said first duct (39) has a smaller flow cross-section than the flow cross-section of the said second duct (31, 36, 38).

14. A unit according to Claim 13, characterised in that the said second duct (31, 36, 38) has a flow cross-section, the value of which is at least twice the value of the flow cross-section of the said first duct (39).

15. A unit according to claim 14, characterised in that the value of the flow cross-section of the said first duct (39) is substantially variable between 0.12 and 0.50 square millimetres.
